(19) Europäisches Patentamt
European Patent Office
Office européen des brevets

(11) **EP 2 236 576 A1**

(12) **EUROPÄISCHE PATENTANMELDUNG**

(43) Veröffentlichungstag:
**06.10.2010 Patentblatt 2010/40**

(51) Int Cl.:
***C09J 7/02*** *(2006.01)*

(21) Anmeldenummer: **10158571.9**

(22) Anmeldetag: **31.03.2010**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA ME RS**

(30) Priorität: **03.04.2009 DE 102009016109**
**29.06.2009 DE 102009027283**

(71) Anmelder: **TESA SE**
**20253 Hamburg (DE)**

(72) Erfinder:
• **Neubert, Ingo Dr.**
**22850, Norderstedt (DE)**
• **Kampers, Maren**
**21217, Seevetal (DE)**
• **Diamantis, Nico**
**25474, Bönningstedt (DE)**
• **Krawinkel, Thorsten Dr.**
**22457, Hamburg (DE)**

(54) **Klebefolie zum Verschließen von Gefäßen und Kanälen, Herstellung und Verwendung dieser**

(57) Klebefolie insbesondere zum Verschließen von Gefäßen und Kanälen, in denen chemische, biologische oder biochemische Reaktionen durchgeführt werden, bestehend aus einer Trägerfolie, die einseitig mit einer Haftklebmasse beschichtet ist, **dadurch gekennzeichnet, dass** die Klebefolie eine Transmission von mindestens 89 % (im Wellenlängenbereich zwischen 450 bis 750 nm) und einen HAZE-Wert von maximal 3 % und die Haftklebemasseoberfläche eine Oberflächenrauigkeit $R_a$ von maximal 0,03 $\mu$m und $R_z$ von maximal 0,10 $\mu$m aufweist, wobei der Brechungsindex der Haftklebmasse kleiner als 1,55 ist und die Differenz der Brechungsindizes der Haftklebemasse und der Trägerfolie maximal 0,1 beträgt.

EP 2 236 576 A1

**Beschreibung**

Die vorliegende Erfindung betrifft eine Klebefolie, bestehend aus einer einseitig mit einer Klebmasse ausgerüsteten Trägerfolie, die insbesondere zum Verschließen von Gefäßen und Kanälen, in denen biologische oder biochemische Reaktionen durchgeführt werden, eingesetzt werden kann, sowie die Herstellung und die Verwendung derselben.

Zur Durchführung von modernen analytischen Verfahren in Biologie, Biochemie und Medizin werden üblicherweise Gefäße wie zum Beispiel Mikrotiterplatten oder Biosensoren beziehungsweise so genannte Microfluidic Devices mit Mikrokanälen verwendet. Mikrotiterplatten bestehen typischerweise aus einer Kunststoffplatte, die mehrere, voneinander isolierte Vertiefungen in Reihen und Spalten enthalten, die als Reaktionsgefäße für die biochemischen Prozesse dienen. Es gibt Mikrotiterplatten mit 6, 12, 24, 48, 96, 384 oder 1536 Vertiefungen, den so genannten Wells. Microfluidic Devices sind Reaktoren im Mikrometerbereich, in den zum Beispiel chemische beziehungsweise biochemische Reaktionen oder physikalische Prozesse durchgeführt werden. Als beispielhafte biochemische Verfahren seien DNA-Amplifikationsverfahren wie Ligase- (LCR) oder Polymerase- (PCR) Kettenreaktion und Strand Displacement Amplification (SDA) sowie Blutzuckerkonzentrationsbestimmung durch Glukooxidase-Teststreifen genannt.

Für die biochemischen und analytischen Prozesse und Verfahren werden die Gefäße und Kanäle üblicherweise bedeckt oder verschlossen, um störende Umwelteinflüsse, Verlust an Flüssigkeit aber auch Crosskontamination zu vermeiden. Zu diesem Zweck werden üblicherweise einseitig klebende Klebfolien eingesetzt.

Diese Klebfolien müssen eine ausreichende Klebkraft besitzen, um gut zu haften, zusätzlich müssen die Folien und die Verklebungsstelle möglichst wenig wasserdampfdurchlässig sein, um einen Flüssigkeitsverlust oder das Austrocknen während der Lagerung oder der biochemischen Reaktion, die auch bei höheren Temperaturen von 98 °C stattfinden kann, zu vermeiden. Zudem sollten die Klebfolien nach der Anwendung rückstandsfrei entfernbar sein. Sodann sollten die Klebmassen auf den Klebfolien eine gewisse Wärmestandfähigkeit besitzen, da ansonsten zum Beispiel während der PCR-Anwendung mit Temperaturen von fast 105 °C leicht Falten in der Folie entstehen, die dazu führen können, dass einige der Vertiefungen, besonders die in den Ecken, offen sind und durch Austrocknen unbrauchbar werden.

Zusätzlich ist eine geringe Anfassklebrigkeit der Klebfolien gewünscht, um das Verwenden insbesondere mit Latexhandschuhen, wie sie üblicherweise in den bioanalytischen Labors getragen werden, zu erleichtern.

Die PCR-Methode (PCR = Polymerase-Kettenreaktion) zur DNA-Amplifikation hat in den letzten 20 Jahren sehr stark an Bedeutung in der Biochemie gewonnen und wird heute als eine moderne Methode in Untersuchungs- und Forschungslaboratorien als Standardverfahren angewandt. Anwendungen sind zum Beispiel der Nachweis von Krankheiten, Bestimmung des genetischen Fingerabdrucks, Klonieren von Genen und zur Entwicklung von Medikamenten (Wirkstoffnachweis, Nachweis von Nebenreaktionen).

Ein spezielles PCR-Verfahren ist die "Real Time Quantitative PCR"-Anwendung. Bei der Real Time Quantitative PCR-Methode kommen Fluoreszenzfarbstoffe, zum Beispiel Cyber Green, zum Einsatz. Die Farbstoffe bilden mit DNA-Molekülen, die sich bei der PCR-Amplifikation bilden, einen fluoreszenzaktiven Komplex. Dadurch lässt sich das Fortschreiten, also die Anzahl der gebildeten DNA-Stränge über das Fluoreszenzsignal, direkt verfolgen. Für eine effektive Verfolgung der PCR-Amplifikation ist eine möglichst hohe Fluoreszenzausbeute beziehungsweise ein möglichst geringes Signal/RauschVerhältnis notwendig. Für die Durchführung der Real Time Quantitative PCR werden üblicherweise Mikrotiterplatten verwendet, die mit einer Klebefolie abgedeckt sind. Die Kontrolle des Fluoreszenzsignals erfolgt hierbei durch die Klebefolie. Dazu wird Licht durch die Klebefolie in die Probe eingestrahlt und anschließend das Fluoreszenzsignal erneut durch die Klebefolie ausgelesen. Die Klebefolie wird hierbei also zweimal durchstrahlt, und damit kommt der Klebefolie eine besondere Bedeutung zu. Um eine möglichst hohe Fluoreszenzausbeute sowie ein möglichst geringes Signal/RauschVerhältnis zu erreichen, muss die Klebefolie eine sehr hohe Transparenz aufweisen.

In der Literatur sind unterschiedliche Klebmassen für Klebefolien, die in den genannten Anwendungen zum Einsatz kommen, beschrieben, als besonders vorteilhaft haben sich Klebmassen auf der Basis von Silikonen gezeigt. US 6,703,120 B beschreibt solche Klebmassen auf Silikonbasis für diese Anwendung.

Diese Klebemassen haben den Vorteil, eine gute Verarbeitbarkeit wegen der sehr geringen Anfassklebrigkeit zu gewährleisten. Zudem besitzen sie eine hohe Verklebungsfestigkeit, so dass der Flüssigkeitsverlust durch Verdunstung nach dem Durchlauf von PCR-Zyklen (üblicherweise 30 Zyklen) nur bei ca. 1 % liegt. Die Muster auf Silikonhaftkleberbasis haben eine Transmission von 81 bis 85 % (je nach Wellenlänge) und einen HAZE-Wert von 8 %.

Nachteilig sind insbesondere der hohe Preis, der für Silikonklebmassen gezahlt werden muss, und die Schwierigkeit, einen geeigneten Schutzliner zu finden, da nur Trennfolien oder Trennpapiere mit Fluorsilikon eine ausreichende Trennwirkung gegenüber Silikonklebmassen gewährleistet.

Klebmassen mit Acrylaten zeigen üblicherweise eine zu hohe Durchlässigkeit für Wasserdampf. Bei Verwendung von Klebefolien mit Acrylatmassen werden hohe Verluste an Flüssigkeit bei der PCR-Anwendung beobachtet. Am Markt befindliche Abdeckfolien werden ausschließlich für Standardanwendungen verwendet. Die Transmission dieser Abdeckfolien liegt bei < 80 %.

Die Transparenz beziehungsweise der Transmissionsgrad eines Objektes sind abhängig von seinem Extinktionskoeffizenten, der Reflexion an den Oberflächen sowie der Wellenlänge des für die Untersuchung verwendeten Lichts. Der Extinktionskoeffizent ist stoffspezifisch und abhängig von der Absorption des verwendeten Materials. Um ein Material mit einem hohen Transmissionsgrad zu erhalten, müssen sowohl Absorption wie auch Reflexion vermieden werden.

Reflexion tritt an allen Oberflächen und Materialgrenzflächen auf. Sie ist zum einen von der Oberflächenrauigkeit und zum anderen von dem Brechungsindex der verwendeten Materialen abhängig. An einer rauen Oberfläche kommt es zusätzlich zu einer diffusen Streureflexion. Der Zusammenhang zwischen der Reflexion an einer Grenzfläche und dem Brechungsindex der angrenzenden Schichten wird durch die Fresnel-Gleichung beschrieben. Im Spezialfall, dass es sich um transparente Materialien handelt und der Lichtstrahl senkrecht einfällt und der Einfluss der Wellenlänge vernachlässigt werden kann, lässt sich die Fresnel-Gleichung wie folgt vereinfachen:

$$R = (n_2 - n_1)^2 / (n_2 + n_1)^2 \qquad\qquad \text{Gl. 1}$$

$R$ = Reflexion an der Grenzfläche
$n_1$ = Brechungsindex Medium 1
$n_2$ = Brechungsindex Medium 2
Brechungsindex Luft $n_{Luft} \approx 1$

Die Reflexion tritt an allen Grenzflächen auf und reduziert damit den Transmissionskoeffizenten eines Objektes. So kann zum Beispiel die maximal erreichbare Transmission einer Polyesterfolie mit einem Brechungsindex $n_2 = 1,6$ unter Berücksichtung, dass der Lichtstahl sowohl bei Eintritt in die Folie als auch beim Austritt aus der Folie dem Reflexionsgesetz nach Fresnel gehorcht, einen Wert von 90 % nicht überschreiten.

Aufgabe der vorliegenden Erfindung ist es, eine Klebefolie zur Verfügung zu stellen, die ihrerseits zur Versiegelung von Kanälen und Reaktionsgefäßen, insbesondere Mikrotiterplatten hervorragend geeignet ist und die die Nachteile der bekannten Klebemassen beziehungsweise -folien nicht oder nicht in so großem Umfang aufweist.

Gelöst wird diese Aufgabe erfindungsgemäß durch eine Klebefolie, wie sie im Hauptanspruch niedergelegt ist. Gegenstand der Unteransprüche sind dabei vorteilhafte Ausgestaltungen und Weiterbildungen der Klebefolie, Verfahren zur Herstellung sowie die Verwendung der erfindungsgemäßen Klebefolie.

Demgemäß betrifft die Erfindung eine Klebfolie insbesondere zum Verschließen von Gefäßen und Kanälen, in denen chemische, biologische oder biochemische Reaktionen durchgeführt werden, bestehend aus einer Trägerfolie, die einseitig mit einer Haftklebmasse, also einer viskoelastischen Masse, die bei Raumtemperatur in trockenem Zustand permanent klebrig und klebfähig bleibt, wobei die Klebung durch leichten Anpressdruck sofort auf fast allen Substraten erfolgt, beschichtet ist, wobei

- die Klebefolie eine Transmission von mindestens 89 % (im Wellenlängenbereich zwischen 450 bis 750 nm), vorteilhafterweise von mindestens 91 %, und einen HAZE-Wert (Maß für die Lichtstreuung) von maximal 3 % aufweist,
- die (freie) Haftklebmasseoberfläche eine Oberflächenrauigkeit $R_a$ von maximal 0,03 $\mu$m und $R_z$ von maximal 0,10 $\mu$m, vorteilhafterweise eine Oberflächenrauigkeit $R_a$ von maximal 0,02 $\mu$m sowie $R_z$ von maximal 0,07 $\mu$m aufweist,
- der Brechungsindex der Haftklebmasse kleiner als 1,55 ist und
- die Differenz der Brechungsindizes der Haftklebmasse und der Trägerfolie maximal 0,1, vorteilhafterweise maximal 0,03 beträgt.

Als Klebmassen finden bevorzugt solche auf Basis von Blockcopolymeren enthaltend Polymerblöcke, überwiegend gebildet von Vinylaromaten (A-Blöcke), bevorzugt Styrol, und solchen überwiegend gebildet durch Polymerisation von 1,3-Dienen (B-Blöcke), bevorzugt Butadien und Isopren Anwendung. Sowohl Homo- als auch Copolymerblöcke sind erfindungsgemäß nutzbar. Resultierende Blockcopolymere können gleiche oder unterschiedliche B-Blöcke enthalten. Vorzugsweise sind die Blockcopolymere teilweise, selektiv oder vollständig hydriert. Blockcopolymere können eine lineare A-B-A-Struktur aufweisen. Einsetzbar sind ebenfalls Blockcopolymere von radialer Gestalt sowie sternförmige und lineare Multiblockcopolymere. Als weitere Komponenten können A-B-Zweiblockcopolymere vorhanden sein. Blockcopolymere von Vinylaromaten und Isobutylen sind ebenfalls erfindungsgemäß einsetzbar. Sämtliche der vorgenannten Polymere können alleine oder im Gemisch miteinander genutzt werden.

Vorzugsweise handelt es sich bei den Vinylaromatenblockcopolymeren um Styrolblockcopolymere.

Zumindest ein Teil der eingesetzten Blockcopolymere sind dabei vorteilhafterweise säure- oder säureanhydridmodifiziert, wobei die Modifizierung hauptsächlich durch radikalische Pfropfcopolymerisation von ungesättigten Mono- und Polycarbonsäuren oder -säureanhydriden wie zum Beispiel Fumarsäure, Itaconsäure, Citraconsäure, Acrylsäure, Maleinsäureanhydrid, Itaconsäureanhydrid oder Citraconsäureanhydrid, bevorzugt Maleinsäureanhydrid erfolgt. Bevorzugt liegt der Anteil an Säure beziehungsweise Säureanhydrid zwischen 0,5 und 4 Gew.-% bezogen auf das gesamte Blockcopolymer.

Kommerziell sind solche Blockcopolymere zum Beispiel unter dem Namen Kraton FG 1901 und Kraton FG 1924 der Firma Kraton beziehungsweise Tuftec M 1913 und Tuftec M 1943 der Firma Asahi erhältlich.

Die Haftklebemasse hat vorzugsweise einen Anteil von 20 bis 70 Gew.-% von Vinylaromatenblockcopolymer, vorzugsweise 30 bis 60 Gew.-%, und besonders bevorzugt 35 bis 55 Gew.-%, jeweils bezogen auf die gesamte Klebmasse, wobei nicht der gesamte Anteil an Blockcopolymeren anhydrid- beziehungsweise säuremodifiziert vorliegen muss.

Neben den schon genannten säure- oder säureanhydridmodifizierten Vinylaromatenblockcopolymeren können auch noch Elastomere und/oder weitere Säuren oder Säureanhydride zugesetzt werden, um einen höheren Vernetzungsgrad und damit eine noch weiter verbesserte Kohäsion zu erreichen. Dabei sind sowohl monomere Säureanhydride und Säuren, wie sie in US 3,970,608 A1 beschrieben sind, als auch säure- oder säureanhydridmodifizierte Polymere als auch säureanhydridenthaltende Copolymere wie Polyvinylmethylether-maleinsäureanhydrid-Copolymere, zum Beispiel zu beziehen unter dem Namen Gantrez, vertrieben von der Firma ISP, einsetzbar.

Die verwendete Haftklebmasse besteht gemäß einer weiteren vorteilhaften Ausführungsform der Erfindung vorteilhafterweise aus zumindest einem säure- oder säureanhydridmodifizierten Vinylaromatenblockcopolymer, aus zumindest einem Klebharz und vorzugsweise aus zumindest einem Metallchelat.

Die Haftklebemasse kann zusätzlich Metalle oder Metallchelate als Vernetzer enthalten. Die Metalle der Metallchelate können die der 2. 3. 4. und 5. Hauptgruppe und die Übergangsmetalle sein. Besonders geeignet sind zum Beispiel Aluminium, Zinn, Titan, Zirkonium, Hafnium, Vanadium, Niob, Chrom, Mangan, Eisen, Kobalt, und Cer. Besonders bevorzugt sind Aluminium und Titan.

Eine Vernetzung von maleinsäureanhydridmodifizierten Blockcopolymeren mit Chelaten ist bekannt aus der EP 1 311 559 A2, bei der eine Steigerung der Kohäsion der Blockcopolymermischungen beschrieben wird.

Die Metallchelate können gemäß einer vorteilhaften Ausführungsform der Erfindung durch die folgende Formel wiedergegeben werden:

$$(R_1O)n \, M \, (XR_2Y)m,$$

wobei

M ein Metall wie oben beschrieben ist;
$R_1$ eine Alkyl- oder Arylgruppe wie Methyl, Ethyl, Butyl, Isopropyl oder Benzyl ist;
n null oder eine größere ganze Zahl ist;
X und Y Sauerstoff oder Stickstoff sind, die jeweils auch durch eine Doppelbindung an $R_2$ gebunden sein können;
$R_2$ eine X und Y verbindende Alkylengruppe ist, die verzweigt sein und/oder auch Sauerstoff oder weitere Heteroatome in der Kette enthalten kann;
m eine ganze Zahl, mindestens jedoch 1 ist.

Bevorzugte Chelatliganden sind solche, die aus der Reaktion folgender Verbindungen entstanden sind: Triethanolamin, 2,4-Pentandion, 2-Ethyl-1,3-Hexandiol oder Milchsäure Besonders bevorzugte Vernetzer sind Aluminium- und Titanacetylacetonate.

Klebmassen auf Basis von säuremodifizierten Vinylaromatenblockcopolymeren, die über Metallchelate vernetzt werden, besitzen eine deutlich reduzierte Anfassklebrigkeit gegenüber typischerweise eingesetzten Klebmassen auf der Basis von Vinylaromatenblockcopolymeren. Trotzdem ist die Verklebungsfestigkeit immer noch hoch genug, um auch bei diesen Massesystemen bei der Verwendung in einer Klebefolie, die zur Mikrotiterabdeckung eingesetzt wird, eine Verdunstungsrate von unter 1 % zu erreichen.

Außerdem lassen sich diese Klebmassen hervorragend wieder ablösen, ohne Klebmasserückstände auf den Mikrotiterplatten zu hinterlassen. Auch beim Durchstechen mit einer Spritze bleiben an dieser keine Klebmassereste hängen.

Die vorteilhaften Klebmassen nutzen des Weiteren Klebrigmacher, insbesondere Klebharze, die mit dem Elastomerblock der Vinylaromatenblockcopolymere verträglich sind.

Bevorzugt geeignet sind unter anderem nicht hydrierte, partiell- oder vollständig hydrierte Harze auf Basis von Kolophonium und Kolophoniumderivaten, hydrierte Polymerisate des Dicyclopentadiens, nicht hydrierte, partiell, selektiv oder vollständig hydrierte Kohlenwasserstoffharze auf Basis von $C_5$-, $C_5/C_9$- oder $C_9$-Monomerströmen, Polyterpenharze auf Basis von $\alpha$-Pinen und/oder $\beta$-Pinen und/oder $\delta$-Limon hydrierte Polymerisate von bevorzugt reinen $C_8$- und $C_9$-Aromaten. Vorgenannte Klebharze können sowohl allein als auch im Gemisch eingesetzt werden.

Für den Einsatz in der PCR werden besonders solche Harze eingesetzt, die farblos sind, idealerweise hydrierte Kohlenwasserstoffharze auf Basis von $C_5$-, $C_5/C_9$- oder $C_9$.

Durch eine geeignete Wahl der zugesetzten farblosen Klebharze ist die Herstellung von Klebmassen und Klebefolien möglich, die die optischen Analysen der Proben beziehungsweise die Fluoreszenzmessung nicht beeinflussen sowie die Transparenz der erfindungsgemäßen Klebefolie nicht durch Absorption verringern.

Die Haftklebrigkeit der Haftklebemasse kann optional erst durch thermische Aktivierung oder durch Lösemittelaktivierung erzeugt werden.

Die Klebmassen zeigen eine besonders gute Haftung zu Polypropylen und Polystyrol, die Materialien, aus denen üblicherweise die Mikrotiterplatten hergestellt werden.

Die Klebmassen sind ebenfalls resistent gegenüber bestimmten in der Analytik eingesetzten Chemikalien, besonders gegenüber polaren Lösungsmitteln wie DMSO (Dimethylsulfoxid).

Der Träger der Klebefolie ist eine Kunststofffolie mit einer hohen Transparenz. Die Kunststofffolien können aus Polypropylen oder Polyethylenterephthalat bestehen und haben eine Transmission von mindestens 88 % und bevorzugterweise einen Brechungsindex von maximal 1,6. Die Trägerfolie kann mono- oder biaxial verstreckt sein sowie aus einer Monoschicht oder aus mehreren Coextrusionsschichten bestehen.

(Der angegebene Wert für die Transmission bezieht sich auf die Kunststofffolie, der oben angegebene Wert auf das beschichtete Produkt. Die Transmission wird durch die Beschichtung leicht besser.)

Die vorliegende Erfindung trägt den physikalischen Gesetzmäßigkeiten der Optik Rechnung. Um eine möglichst hohe Transparenz der Klebefolie zu erreichen, werden folgende Punkte berücksichtigt:

- Verwendung einer Haftklebemasse mit einem Brechungsindex von maximal 1,55, um die Reflexion an der Grenzfläche zwischen der Klebmasse zur Luft möglichst gering zu halten
- die Differenz der Brechungsindizes der Haftklebemasse und der Trägerfolie beträgt maximal 0,1 und vorteilhafterweise maximal 0,03, um die Reflexion an der Grenzfläche Haftklebmasse/Trägerfolie möglichst zu vermeiden

Zur Optimierung der Transparenz werden darüber hinaus Rohstoffe beziehungsweise Additive in der Haftklebemasse und/oder Trägerfolie vermieden, die eine Absorption beziehungsweise Eigenfluoreszenz verursachen. Gemäß einer vorteilhaften Ausführungsform sind daher Haftklebemasse und/oder Trägerfolie frei von Rohstoffen und/oder Additiven, die eine Absorption beziehungsweise Eigenfluoreszenz verursachen.

Die Herstellung einer Haftklebemasse mit einer Oberflächenrauigkeit von $R_a$ von maximal 0,03 $\mu$m und $R_z$ von maximal 0,10 $\mu$m wird gemäß einer vorteilhaften Ausführungsform der Erfindung erreicht, indem ein sehr glattes Hilfsmaterial mit der Haftklebemasse beschichtet und anschließend mit dem Trägermaterial laminiert wird.

Als Beschichtungsverfahren eignen sich hierbei die üblichen Beschichtungsverfahren beispielsweise Rasterwalzenauftrag, Kommarakelbeschichtung, Mehrwalzenbeschichtung, sowie Druckverfahren. Besonders geeignet zur Erzeugung einer sehr glatten Haftklebmassenoberfläche sind kontaktlose vordosierende Beschichtungsverfahren wie zum Beispiel Düsenbeschichtungen. Bei einem kontaktlosen vordosierenden Beschichtungsverfahren wird eine besonders gleichmäßige und fehlstellenfreie Beschichtung mit hoher Präzision und glatter Oberfläche erreicht. Besonders bevorzugt wird als spezielles Düsenbeschichtungsverfahren das Curtain-Coating. Beim Curtain-Coating fällt ein Beschichtungsfilm nach Austritt aus der Düse ähnlich einem Vorhang auf die sich darunter hindurchbewegende zu beschichtende Bahn. Diese kontaktlose Beschichtung erzeugt einen gleichmäßigeren und in Abhängigkeit von der Viskosität und Bahngeschwindigkeit sehr viel dünneren Beschichtungsfilm verglichen mit anderen konventionellen Beschichtungsverfahren. Die Haftklebemasse wird erfindungsgemäß besonders bevorzugt aus einem Lösemittel beschichtet. Die Beschichtungslösung wird vorteilhafterweise unmittelbar vor der Beschichtung filtriert, um störende Gelpartikel zu entfernen.

Das Hilfsmaterial wird nur temporär verwendet, das heißt, dass das Hilfsmaterial spätestens unmittelbar vor der Verwendung der Klebefolie entfernt wird. Dieses temporäre Hilfsmaterial hat auf der Besichtungsseite vorteilhafterweise eine Oberflächenrauigkeit $R_a$ von maximal 0,04 $\mu$m und $R_z$ von maximal 0,16 $\mu$m.

Beim Abziehen des Hilfsmaterials darf die Oberflächenrauigkeit der Klebmassenoberfläche nicht erhöht werden. Daher hat es sich als vorteilhaft erwiesen, wenn die mit der Klebemasse versehene Beschichtungsseite des Hilfsmaterials eine antiadhäsive Wirkung beziehungsweise eine antiadhäsive Beschichtung aufweist. Üblicherweise werden als Hilfsmaterial Trennfolien oder Trennpapiere, die eine Silikon- oder Fluorsilikonbeschichtung aufweisen, verwendet. Entsprechende Trennfolien und Trennpapiere können zum Beispiel bei Laufenberg GmbH, Loparex B.V., CP Films Inc., Mondi Inncoat GmbH, Siliconature SpA. und Schleipen & Erkens GmbH bezogen werden.

Die standardmäßig kommerziell verfügbaren Trennfolien und Trennpapiere haben allerdings deutlich höhere Oberflächenrauigkeit von $R_a$ von > 0,1 $\mu$m und $R_z$ von > 1,0 $\mu$m und sind daher zur Herstellung der erfindungsgemäßen Klebefolie nicht geeignet. Um eine Trennfolie mit einer geringen Oberflächenrauigkeit $R_a$ von maximal 0,04 $\mu$m und $R_z$ von maximal 0,16 $\mu$m zu erhalten, ist es notwendig eine sehr glatte Rohfolie einzusetzen. Am besten eigenen sich hierfür Polyesterfolien, zum Beispiel Polyethylenterephthalat, die zumindest auf der Beschichtungsseite keine oder zumindest nur im geringen Maße Antiblockmittel aufweisen. Antiblockmittel sind zum Beispiel Siliziumoxid-Teilchen, die aus der Oberfläche der Kunststofffolie herausragen, um somit das enge Aufeinanderlegen benachbarter Folienschichten beim Aufwickeln, dem so genannten Verblocken oder Verschweißen, zu verhindern. Eine Beispielhaft geeignete Polyesterfolie ist Lumirror von Toray Inc. Die Beschichtungsseite dieser Folien wird vorteilhafterweise mit einer antiadhäsiven Beschichtung aus Polysiloxan ausgerüstet. Die Polysiloxan-Beschichtung darf jedoch die Oberflächenrauigkeit nicht nachteilig erhöhen. Daher wird die Polysiloxan-Beschichtung vorteilhafterweise mittels einem Lösemittel aufgebracht wird.

Die spezielle Beschichtungstechnik führt zu einer sehr glatten Klebmassenoberfläche mit einer Oberflächenrauigkeit $R_a$ von maximal 0,03 µm und $R_z$ von maximal 0,10 µm, so dass Streureflexion (diffuse Reflexion) an der Oberfläche minimiert wird, was dazu führt, dass der HAZE-Wert maximal 3 % beträgt. Hierzu trägt die Verwendung der sehr glatten Trennfolie erheblich bei.

Überraschenderweise kann eine erfindungsgemäße hoch transparente Klebfolie erzeugt werden, mit einer Transmission nahe der theoretisch maximal erreichbaren Transmission, die sehr gut für eine Abdeckung von Reaktionsgefäßen und Kanälen geeignet ist, insbesondere auch für den Einsatz zur Abdeckung von Mikrotiterplatten für die Real Time Quantitative PCR Anwendung.

Demgemäß stellt die Verwendung der erfindungsgemäßen Klebefolie als temporäre oder dauerhafte Abdeckfolie für Mikrotiterplatten eine bevorzugte Verwendungsmöglichkeit dar.

**Testmethoden**

**Transmission**

Der Transmissionsgrad beziehungsweise die Transmission geben das Verhältnis der auf der Rückseite eines mit Licht durchstrahlten Körpers ankommenden Lichtleistung zu einem Vergleichsstrahlengang üblicherweise in % an. Die Transmission des Klebefilms und der Trägerfolie wird mit einem Spektrophotometer Uvikon 923 von Koutron AG (ohne Ulbrichtkugel) nach DIN EN ISO 13468-2 bei einer Wellenlänge von 450 bis 750 nm bestimmt.

**HAZE-Messung**

Der HAZE-Wert beschreibt den Anteil des transmittierten Lichts, der von der durchstrahlten Probe nach vorne gestreut wird. Somit quantifiziert der HAZE-Wert Materialfehler in der Oberfläche oder der Struktur, die die klare Durchsicht stören.

Das Verfahren zur Messung des Haze-Wertes wird in der Norm ASTM D 1003 beschrieben. Die Norm erfordert die Messung von vier Spektren. Für jedes Spektrum wird der Lichttransmissionsgrad berechnet. Die vier Transmissionsgrade werden zum prozentualen Haze-Wert verrechnet. Der HAZE-Wert wird mit einem Haze-gard Dual von Byk-Gardner GmbH gemessen.

**Brechungsindex**

Der Brechungsindex (heute üblicherweise als Brechzahl bezeichnet) ist eine Stoffkonstante und gibt die optische Dichte beziehungsweise die Geschwindigkeit der Ausbreitung von Lichtwellen in einem Material wieder. Der Brechungsindex der Klebmassen wird mit einem Abbe-Refraktometer nach DIN 51423 bestimmt. Für den Brechungsindex der Trägerfolien werden Literaturdaten beziehungsweise Herstellerangaben verwendet. Gemäß der DIN-Vorschrift erfolgt die Messung bei einer Temperierung auf 20 °C und bei einer Wellenlänge von 589 nm mit einer Natrium-Spektrallampe (Brechungsindex für die Natrium-d-Linie entsprechend 589 nm bei 20 °C).

**Oberflächenrauigkeit**

Die Oberflächenrauigkeit der Klebmasse, der Trägerfolie und des Hilfsmaterials wird mit Confocal-Multi-Pinhole der Firma Nanofocus GmbH nach DIN EN ISO 4287 (mit Gaussfilter 0,08 mm) bestimmt. Hierbei werden die Werte $R_a$ und $R_z$ bestimmt.

$R_a$, die arithmetische Mittenrauigkeit, ist der arithmetische Mittelwert aller Profilwerte des Rauheitsprofils.

Die Einzelrautiefe $R_{zi}$ ist die Summe aus der Höhe der größten Profilspitze und der Tiefe des größten Profiltals des Rauheitsprofils innerhalb einer Einzelmessstrecke.

Die Rautiefe $R_z$ ist der arithmetische Mittelwert der Einzelrautiefen $R_{zi}$ aufeinander folgender Einzelmessstrecken, wobei hier fünf aufeinander folgende Einzelmessstrecken ausgewertet werden:

$$R_z = \frac{1}{n}\left(R_{z1} + R_{z2} + \ldots + R_{zn}\right)$$

Die maximale Rautiefe $R_{max}$ ist die größte Einzelrautiefe innerhalb der Gesamtmessstrecke.

## Klebkraftmessung

Die Prüfung der Schälfestigkeit (Klebkraft) erfolgt gemäß PSTC-1.

Ein 2 cm breiter Streifen eines wie unten beschrieben hergestellten Musters wird auf eine Stahlplatte beziehungsweise Polystyrolplatte durch dreimaliges doppeltes Überrollen mittels einer 2 kg Rolle verklebt. Die Platte wird eingespannt und der Haftklebestreifen über sein freies Ende an einer Zugprüfmaschine unter einem Schälwinkel von 180° mit einer Geschwindigkeit von 300 mm/min abgezogen.

## Flüssigkeitsverluste bei PCR-Messung

Alle 96 Vertiefungen einer Mikrotiterplatte werden mit jeweils 50 µl einer farbigen wässrigen Lösung gefüllt. Die Oberfläche der Platte wird trocken gerieben mit einem fusselfreien Tuch, um anhaftende Flüssigkeitstropfen zu entfernen.

Die Platte wird dann mit der erfindungsgemäßen Klebfolie verschlossen, indem diese mittig auf die Platte aufgebracht wird und mit einem hierfür üblichen Applikator rundum gut angedrückt wird. Das Gewicht der Platte wird auf der Analysenwaage bestimmt.

Es wird ein Temperaturprogramm gefahren von

1: 94 °C 2 min
2: 94°C 15s
3: 50°C 15s
4: 72 °C 30s
5: 72 °C 2 min

wobei die Schritte 2 bis 4 30 mal wiederholt werden.

Anschließend wird auf 22 °C temperiert. Nach einer visuellen Kontrolle, ob alle Vertiefungen noch gefüllt sind, werden die Muster nach 24 h erneut gewogen.

Die Verdunstung beziehungsweise Gewichtsverlust wird daraufhin in Prozent ausgerechnet.

Im Folgenden wird die Erfindung anhand von Beispielen näher erklärt, ohne damit die Erfindung in irgendeiner Form beschränken zu wollen.

## Beispiele

Eigenschaften der eingesetzten Rohstoffe:

Kraton FG 1901    SEBS (Styrol-Ethylen/Butylen-Styrol-Blockcopolymer), 100 % Dreiblock, Blockpolystyrolgehalt: 30 Gew.-%, mit ca. 2 Gew.-% Maleinsäureanhydrid modifiziert, Kraton Polymers

Kraton FG 1924    SEBS (Styrol-Ethylen/Butylen-Styrol-Blockcopolymer), ca. 41 Gew.-% Zweiblock, Blockpolystyrolgehalt: 13 Gew.-%, mit ca. 1,3 Gew.-% Maleinsäureanhydrid modifiziert Kraton Polymers

| Regalite R 1100 | hydriertes $C_9$-Harz mit einem Erweichungspunkt von ca. 100 °C, Eastman Chemicals |
| Kristalex 1140 | reines Aromatenharz als Endblockverstärker mit einem Erweichungspunkt von ca. 140 °C, Eastman |
| Escorez 5600 | aromatisch-modifiziertes, cycloaliphatisches Kohlenwasserstoffharz mit einem Erweichungspunkt von ca. 104 °C, Exxon Mobil |
| Shellflex 371 | naphthenisches Öl, Shell |

**Beispiel 1**

Die Bestandteile der Haftklebemasse, bestehend aus 40 Teilen Kraton FG 1901, 60 Teilen Kraton FG 1924, 100 Teilen Regalite R 1100, 20 Teilen Shellflex 371 und 10 Teilen Kristalex 1140 werden in einer Mischung aus Toluol/Benzin/Isopropanol 40:40:20 gelöst, so dass ein Feststoffgehalt von 40 Gew.-% entsteht. Kurz vor der Beschichtung wird 1 Teil Aluminiumacetylacetonat, gelöst mit 10 Gew.-% in Toluol, zu der Mischung zugegeben und durch Rühren homogen verteilt.

Die Beschichtung erfolgt mittels einer Düsenbeschichtung auf eine silikonisierte Polyestertrennfolie (transparente PET-Folie mit Polysiloxan-Trennlack-Beschichtung aus Lösung, Dicke 50 $\mu$m, $R_a$ = 0,02 $\mu$m, $R_z$ = 0,11 $\mu$m), wobei der Haftklebmassefilm kontaktlos auf die Trennfolie aufgelegt wird. Anschließend erfolgt die Trocknung der Haftklebmasseschicht in einem Trockenkanal, in dem die Temperatur von anfänglich 30 °C bei 110 °C am Ende ansteigt. Der Beschichtungsauftrag wird so eingestellt, dass das Flächengewicht der trockenen Haftklebmasse 50 g/cm$^2$ beträgt. Nach dem Trocknen wird auf die offene Seite der Haftklebmasseschicht die Trägerfolie kaschiert. Als Trägerfolie wird die Polypropylenfolie Rayowweb CR 50 von Innovia Films Ltd. (biaxial verstreckt, Transmission 90 %, HAZE 1,5 %, Brechungsindex 1,58) verwendet.

**Beispiel 2**

Analog Beispiel 1 wird eine Haftklebmasse, bestehend aus 40 Teilen Kraton FG 1901, 60 Teilen Kraton FG 1924 und 120 Teilen Escorez 5600 gelöst, beschichtet und getrocknet unter Verwendung einer silikonisierten Polyestertrennfolie als Hilfsmaterial (weiße PET-Folie mit Polysiloxan-Trennlack-Beschichtung aus Lösung, Dicke 50 $\mu$m, $R_a$ = 0,03 $\mu$m, $R_z$ = 0,14 $\mu$m). Als Trägerfolie wird die PET-Folie Melinex 401 DuPont Teijin Films (biaxial verstreckt, Transmission 88 %, HAZE 0,3 %, Brechungsindex 1,51) verwendet.

**Gegenbeispiel 1**

Zum Vergleich wird das Produkt 9795 von 3M Inc. (kommerziell erhältlich als Absolut™ QPCR Seal von Thermo Fischer Scientific Inc.) untersucht. Die Klebefolie besteht aus einer PP-Trägerfolie, die einseitig mit einer Silikonhaftklebmasse beschichtet ist.

Das Produkt weist eine relativ schlechte Transparenz auf, so dass zumindest für die Real Time Quantitative PCR Anwendung zu befürchten ist, dass das Signal-Rauschverhältnis unbefriedigend ist.

**Gegenbeispiel 2**

Haftklebemasse analog Beispiel 1 wird mittels Kommarakelbeschichtung auf eine Standard-PET-Trennfolie (transparente PET-Folie mit Polysiloxan-Trennlack-Beschichtung (100 % System), Dicke 50 $\mu$m, $R_a$ = 0,26 $\mu$m, $R_z$ = 1,3 $\mu$m) beschichtet, getrocknet und mit einer Trägerfolie analog Beispiel 1 kaschiert.

Dieses Muster hat aufgrund der Verwendung einer Standard-Trennfolie und des Standard-Kontakt-Beschichtungsverfahren eine sehr hohe Oberflächenrauigkeit und somit relativ schlechte Transmissionswerte. Des Weiteren zeigt das Muster bedingt durch das Beschichtungsverfahren Fehlstellen, die sich auf die optische Qualität auswirken.

**Gegenbeispiel 3**

Zum Vergleich wird das kommerzielle Produkt Biozym Optical von Biorad Laboratories Inc. untersucht. Die Klebefolie besteht aus einer PET-Trägerfolie, die einseitig mit einer Acrylathaftklebemasse beschichtet ist. Für eine bessere Vergleichbarkeit wird auf die Haftklebmasse der Klebfolie die glatte silikonisierte Polyestertrennfolie aus Beispiel 2 laminiert. Anschließend wird dieser Verbund eine Woche bei 40 °C unter einem 10 kg Metallblock gelagert. Durch dieses Vorgehen konnten zu Beispiel 2 sehr ähnliche Oberflächenrauigkeiten der Haftklebmasse erreicht werden.

Die Klebfolie zeigt im Vergleich zu den Beispielen 1 und 2 relativ schlechte Transmissionswerte. Das liegt an der Kombination einer Acrylat-Haftklebmasse und einem PP-Träger und des damit verbundenen zusätzlichen Transmissionsverlustes aufgrund von Reflexion an der Grenzfläche durch den großen Brechungsunterschied beider Materialien.

EP 2 236 576 A1

| | | Beispiel 1 | Beispiel 2 | Gegenbeispiel 1 | Gegenbeispiel 2 | Gegenbeispiel 3 |
|---|---|---|---|---|---|---|
| Haftlebmasse | | | | | | |
| Art der Haftklebmasse | | Styrol Bock-Copolymer | Styrol Bock-Copolymer | Silikon Polymer | Styrol Bock-Copolymer | Acrylat Copolymer |
| Brechungsindex | | 1,51 | 1,51 | nicht bekannt | 1,51 | 1,47 |
| **Hilfsmaterial** | | | | | | |
| Art des Hilfsmaterials | | Silikon. PET-Film | Silikon. PET-Film | Silikon. PET-Film | Silikon. PET-Film | Silikon. PET-Film |
| Oberflächenrauigkeit $R_a$ | $\mu$m | 0,02 | 0,04 | 0,07 | 0,26 | 0,04 |
| Oberflächenrauigkeit $R_z$ | $\mu$m | 0,11 | 0,16 | 0,36 | 1,3 | 0,16 |
| **Trägermaterial** | | | | | | |
| Art des Trägers | | PP-Film | PET-Film | PP-Film | PP-Film | PET-Film |
| Transmission | % | 90 | 88 | nicht bekannt | 90 | nicht bekannt |
| HAZE | % | 1,5 | 0,3 | nicht bekannt | 1,5 | nicht bekannt |
| Brechungsindex | | 1,49 | 1,58 | 1,49 | 1,49 | 1,58 |
| **Produkteigenschaften** | | | | | | |
| Oberflächenrauigkeit $R_a$ der Haftklebmasse | $\mu$m | 0,01 | 0,03 | 0,09 | 0,29 | 0,05 |
| Oberflächenrauigkeit $R_z$ der Haftklebmasse | $\mu$m | 0,04 | 0,10 | 0,31 | 0,89 | 0,15 |
| Transmission (450 bis 750 nm) | % | 90 bis 92 | 89 bis 90 | 81 bis 85 | 84 bis 86 | 82 bis 85 |
| HAZE | % | 1,7 | 2,0 | 7,3 | 8,3 | 5,8 |
| Klebkraft auf Stahl | N/cm | 4,1 | 3,6 | 5,4 | 3,9 | 2,7 |
| Klebkraft auf Polypropylen | N/cm | 1,5 | 1,4 | 0,2 | 1,5 | 2,0 |
| Flüssigkeitsverluste PCR | % | 0,9 | 1,4 | 1,1 | 1,2 | 2,8 |

**Patentansprüche**

1. Klebefolie insbesondere zum Verschließen von Gefäßen und Kanälen, in denen chemische, biologische oder biochemische Reaktionen durchgeführt werden, bestehend aus einer Trägerfolie, die einseitig mit einer Haftklebmasse beschichtet ist, **dadurch gekennzeichnet, dass**
   die Klebefolie eine Transmission von mindestens 89 % (im Wellenlängenbereich zwischen 450 bis 750 nm) und einen HAZE-Wert von maximal 3 % und
   die Haftklebemasseoberfläche eine Oberflächenrauigkeit $R_a$ von maximal 0,03 $\mu$m und $R_z$ von maximal 0,10 $\mu$m aufweist,
   wobei der Brechungsindex der Haftklebmasse kleiner als 1,55 ist und die Differenz der Brechungsindizes der Haftklebemasse und der Trägerfolie maximal 0,1 beträgt.

2. Klebefolie nach Anspruch 1,
   **dadurch gekennzeichnet, dass**
   die Differenz der Brechungsindizes der Haftklebemasse und der Trägerfolie maximal 0,03 beträgt.

3. Klebefolie nach Anspruch 1 oder 2,
   **dadurch gekennzeichnet, dass**
   die Transmission der Klebefolie mindestens 91 % beträgt.

4. Klebefolie nach zumindest einem der Ansprüche 1 bis 3,
   **dadurch gekennzeichnet, dass**
   Haftklebemasse und/oder Trägerfolie frei von Rohstoffen und/oder Additiven sind, die eine Absorption beziehungsweise Eigenfluoreszenz verursachen.

5. Klebefolie nach zumindest einem der vorgenannten Ansprüche,
   **dadurch gekennzeichnet, dass**
   die Haftklebmasse aus zumindest einem säure- oder säureanhydridmodifizierten Vinylaromatenblockcopolymer, zumindest einem Klebharz und vorzugsweise zumindest einem Metallchelat gebildet wird.

6. Klebefolie nach zumindest einem der vorgenannten Ansprüche,
   **dadurch gekennzeichnet, dass**
   die Klebemasse einen Anteil von 20 bis 70 Gew.-%, vorzugsweise von 30 bis 60 Gew.-%, weiter vorzugsweise von 35 bis 55 Gew.-% Vinylaromatenblockcopolymer bezogen auf die gesamte Klebmasse enthält, wobei nicht der gesamte Anteil an Blockcopolymeren anhydrid- beziehungsweise säuremodifiziert vorliegen muss, vorzugsweise die Blockcopolymere zumindest teilweise hydriert sind.

7. Klebefolie nach zumindest einem der vorgenannten Ansprüche,
   **dadurch gekennzeichnet, dass**
   es sich bei den Vinylaromatenblockcopolymeren um Styrolblockcopolymere handelt.

8. Klebefolie nach zumindest einem der vorgenannten Ansprüche,
   **dadurch gekennzeichnet, dass**
   der Anteil an Säure beziehungsweise Säureanhydrid zwischen 0,5 und 4 Gew.-% bezogen auf das gesamte Blockcopolymer beträgt.

9. Klebefolie nach zumindest einem der vorhergehenden Ansprüche,
   **dadurch gekennzeichnet, dass**
   die Klebmasse weitere Elastomere und/oder weitere Säuren oder Säureanhydride enthält.

10. Klebefolie nach zumindest einem der vorhergehenden Ansprüche,
    **dadurch gekennzeichnet, dass**
    als Klebharze hydrierte Kohlenwasserstoffharze auf Basis von $C_5$-, $C_5/C_9$- oder $C_9$ eingesetzt werden.

11. Klebefolie nach zumindest einem der vorhergehenden Ansprüche,
    **dadurch gekennzeichnet, dass**
    die Haftklebmasseoberfläche eine Oberflächenrauigkeit $R_a$ von maximal 0,02 $\mu$m und $R_z$ von maximal 0,07 $\mu$m aufweist.

**12.** Klebefolie nach zumindest einem der vorhergehenden Ansprüche,
**dadurch gekennzeichnet, dass**
die Trägerfolie der Klebefolie eine Polypropylen- oder eine Polyethylenterephthalatfolie ist.

**13.** Klebefolie nach zumindest einem der vorhergehenden Ansprüche,
**dadurch gekennzeichnet, dass**
die Klebefolie zusätzlich ein sehr glattes temporäres Hilfsmaterial enthält.

**14.** Klebefolie nach Anspruch 13,
**dadurch gekennzeichnet, dass**
das temporäre Hilfsmaterial aus einer Kunststofffolie und vorzugsweise aus einer PET-Folie besteht, die mit einer Polydimethylsiloxan-Trennlackbeschichtung beschichtet ist, wobei die Beschichtung vorteilhafterweise aus Lösung aufgetragen wird.

**15.** Klebefolie nach zumindest einem der vorhergehenden Ansprüche,
**dadurch gekennzeichnet, dass**
die Beschichtungsseite des temporären Hilfsmaterials eine Oberflächenrauigkeit $R_a$ von maximal 0,04 $\mu$m und $R_z$ von maximal 0,16 $\mu$m aufweist.

**16.** Klebefolie nach zumindest einem der vorhergehenden Ansprüche,
**dadurch gekennzeichnet, dass**
die Trägerfolie einen Brechungsindex von maximal 1,6 aufweist.

**17.** Verwendung einer Klebefolie nach zumindest einem der vorhergehenden Ansprüche zum temporären oder dauerhaften Abdecken von Mikrotiterplatten.

**EP 2 236 576 A1**

| | Europäisches Patentamt / European Patent Office / Office européen des brevets | **EUROPÄISCHER RECHERCHENBERICHT** | **Nummer der Anmeldung**<br>EP 10 15 8571 |
|---|---|---|---|

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 042 579 A1 (TESA AG [DE])<br>1. April 2009 (2009-04-01)<br>* Absatz [0175] *<br>* Absatz [0208] - Absatz [0210] *<br>* Absatz [0213] - Absatz [0215]; Beispiele Träger A, B, C *<br>* Ansprüche 1, 2, 8, 10, 11 *<br>----- | 1-16 | INV.<br>C09J7/02 |
| X | WO 2008/012167 A2 (TESA AG [DE]; HUSEMANN MARC [DE]; STORBECK REINHARD [DE])<br>31. Januar 2008 (2008-01-31)<br>* Seite 29, Zeile 16 - Zeile 20 *<br>* Seite 31, Zeile 30 - Zeile 31 *<br>* Seite 32, Zeile 10 - Zeile 12 *<br>* Seite 34, Zeile 7 - Zeile 23; Beispiel Polymer 3 *<br>* Seite 35, Zeile 20 - Zeile 23 *<br>* Ansprüche 1 - 3, 5, 8 *<br>----- | 1-16 | |
| X | DATABASE WPI Week 200130<br>Thomson Scientific, London, GB; AN 2001-285484<br>XP002592549<br>-& JP 2001 030427 A<br>6. Februar 2001 (2001-02-06)<br>* Zusammenfassung *<br>----- | 1-16 | RECHERCHIERTE SACHGEBIETE (IPC)<br><br>C09J<br>B01L<br>G01N |
| A | EP 1 974 818 A1 (BIOINNOVATONS OY [FI])<br>1. Oktober 2008 (2008-10-01)<br>* Absatz [0027] *<br>* Absatz [0061] *<br>* Ansprüche 1, 2, 4, 8, 10, 11, 12, 15 *<br>----- | 1-17 | |

Der vorliegende Recherchenbericht wurde für alle Patentansprüche erstellt

| Recherchenort<br>München | Abschlußdatum der Recherche<br>26. Juli 2010 | Prüfer<br>Siemsen, Beatrice |
|---|---|---|

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
......................................................................
& : Mitglied der gleichen Patentfamilie, übereinstimmendes Dokument

EPO FORM 1503 03.82 (P04C03)

**EP 2 236 576 A1**

**ANHANG ZUM EUROPÄISCHEN RECHERCHENBERICHT
ÜBER DIE EUROPÄISCHE PATENTANMELDUNG NR.**

EP 10 15 8571

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-07-2010

| Im Recherchenbericht angeführtes Patentdokument | Datum der Veröffentlichung | Mitglied(er) der Patentfamilie | Datum der Veröffentlichung |
|---|---|---|---|
| EP 2042579 A1 | 01-04-2009 | CN 101392158 A<br>DE 102007045168 A1<br>JP 2009102619 A<br>US 2009081430 A1 | 25-03-2009<br>02-04-2009<br>14-05-2009<br>26-03-2009 |
| WO 2008012167 A2 | 31-01-2008 | CN 101495583 A<br>DE 102006035786 A1<br>EP 2049607 A2<br>JP 2009544778 T<br>KR 20090035632 A<br>US 2009208739 A1 | 29-07-2009<br>13-03-2008<br>22-04-2009<br>17-12-2009<br>09-04-2009<br>20-08-2009 |
| JP 2001030427 A | 06-02-2001 | KEINE | |
| EP 1974818 A1 | 01-10-2008 | JP 2008249707 A | 16-10-2008 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6703120 B
- US 3970608 A1

- EP 1311559 A2